# EUROPEAN PATENT APPLICATION

(11) **EP 1 176 689 A2**
(43) Date of publication of application: **30.01.2002**
(21) Application number: 01117953.8
(22) Date of filing: 24.07.2001
(51) Int. Cl.: H02J 3/00

(54) **Power consuption system, information assembly and medium**

(30) Priority: 25.07.2000 JP 2000224651; 25.07.2000 JP 2000224110
(71) Applicant: Matsushita Electric Industrial Co., Ltd., Kadoma-shi, Osaka 571-8501 (JP)
(72) Inventor: Nagamitsu, Sachio, Kyoto-shi, Kyoto 612-0846 (JP); Matsubayashi, Shigeaki, Sakai-shi, Osaka 590-0805 (JP); Matsui, Masaru, Katano-shi, Osaka 576-0034 (JP); Kodama, Hisashi, Ikoma-shi, Nara 630-0141 (JP); Kawase, Mitsuharu, Nara-shi, Nara 631-0062 (JP); Ohishi, Nobuhiro, Osaka-shi, Osaka 558-0002 (JP)
(74) Representative: Grünecker, Kinkeldey, Stockmair & Schwanhäusser Anwaltssozietät

(57) **Abstract**

A power consumption system has
a special price exclusive apparatus which is set in advance so as to consume power at a special price;
a power management means for detecting that a user is utilizing the special price exclusive apparatus and for measuring the amount of power consumed by the special price exclusive apparatus in the case that the user has purchased and is utilizing the special price exclusive apparatus; and
a fee charging means for charging a fee for the measured amount of power consumed that makes an addition to the fee,
wherein the entirety of, or a part of, the added fee is paid to the manufacturer that has sold the special price exclusive apparatus.

## Description

### BACKGROUND OF THE INVENTION

The present invention relates to a power consumption system, an information assembly and a medium for consuming power.

### Related Art of the Invention

A user pays money for a variety of home electronics, such as an air conditioner, a washing machine, a microwave oven or a television and purchases them so as to install them at home. Then, the purchased home electronics are employed by consuming power transmitted from a power company. The power company reads a meter which measures the amount of power consumed by the user so as to impose a fee on the user every month for the amount of power consumed and the user pays the fee to the power company for the amount of power consumed.

Home electronics are widely used in individual homes and energy saving-type home electronics which consume smaller amounts of power have been increasingly developed and sold. Such energy saving-type home electronics have come into wide use and the amount of power consumed has been reduced so that limited energy resources can be utilized more effectively.

That is to say, when a user purchases a new energy saving-type home electronics item in order to replace an existing home electronics item the amount of power consumed is reduced and the fee paid to the power company becomes lower.

In order to purchase an energy saving-type home electronics item, however, it is necessary to pay a price to the manufacturer that sells the item and, thereby, a considerable sum of money is required.

Accordingly, even though an energy saving-type home electronics item is sold, the energy saving-type home electronics item cannot be purchased until a considerable amount of money is available to pay the price.

Though it is possible, of course, to purchase the energy saving-type home electronics item by paying by means of a loan, for example in installments, it is ultimately necessary to pay the amount of the purchase price to the manufacturer from which the item is purchased and, in addition to this, interest must be paid.

In this manner, when an energy saving-type home electronics item is put on the market, if the user purchases the energy saving-type home electronics item the purchase price must be paid to the manufacturer that sells the home electronics item and, therefore, the family budget comes under pressure.

That is to say, even in the case that an energy saving-type home electronics item is put on the market, a considerable amount of money becomes necessary and a problem (first problem) arises that the home electronics item cannot be swiftly replaced by a new item for use.

On the other hand, from the viewpoint of effective usage of energy resources, such as those needed for power, it is a major problem to increase the rate of usage of the above described energy saving-type home electronics items so as to reduce the amount of power consumed because energy resources that exist in the environment of the earth are limited. In order for the user to purchase an energy saving-type home electronics item as described above, a considerable amount of money for the purchase price becomes necessary and, therefore, replacement with an energy saving-type home electronics item cannot be swiftly carried out.

That is to say, there is a problem (second problem) that even though a manufacturer develops and markets an energy saving-type home electronics item, energy saving-type home electronics items have not swiftly come into wide use and energy resources, such as those needed for power, cannot be effectively utilized.

The purpose of the present invention is to provide a power consumption system, information assembly and medium where the user can swiftly purchase a home electronics item for use by taking the above described first problem into consideration.

In addition, the purpose of the present invention is to provide a power consumption system, information assembly and medium that can effectively utilize energy resources by taking the above described second problem into consideration.

### SUMMARY OF THE INVENTION

The 1st invention of the present invention is a power consumption system comprising:
a special price exclusive apparatus which is set in advance so as to consume power at a special price;
a power management means for detecting that a user is utilizing said special price exclusive apparatus and for measuring the amount of power consumed by said special price exclusive apparatus in the case that the user has purchased and is utilizing said special price exclusive apparatus; and
a fee charging means for charging a fee for said measured amount of power consumed that makes an addition to the fee,
wherein the entirety of, or a part of, said added fee is paid to the manufacturer that has sold said special price exclusive apparatus.

The 2nd invention of the present invention is a power consumption system comprising:
a special price exclusive apparatus which is set in advance so as to consume power at a special price;
a power management means for detecting that a user is utilizing said special price exclusive apparatus and for measuring the amount of power consumed by said special price exclusive apparatus in the case that the user has purchased and is utilizing said special price exclusive apparatus; and
a fee charging means for charging a fee for said measured amount of power consumed that makes an addition to the fee,
wherein:
the entirety of, or a part of, said added fee is paid to the manufacturer that has sold said special price exclusive apparatus;
said special price exclusive apparatus has an operational means for carrying out a predetermined operation by consuming said power and
an energy saving control means for carrying out energy saving control of said operational means; and
said energy saving control means also functions as said power management means.

The 3rd invention of the present invention a power consumption system comprising:
a special price exclusive apparatus which is set in advance so as to consume power at a special price;
a power management means for detecting that a user is utilizing said special price exclusive apparatus and for measuring the amount of power consumed by said special price exclusive apparatus in the case that the user has purchased and is utilizing said special price exclusive apparatus;
an energy saving control means for carrying out energy saving control of said special price exclusive apparatus; and
a fee charging means for charging a fee for said measured amount of power consumed that makes an addition to the fee,
wherein:
the entirety of, or a part of, said added fee is paid to the manufacturer that has sold said special price exclusive apparatus; and
said energy saving control means also functions as said power management means.

The 4th invention of the present invention is a power consumption system according to 3rd invention, wherein:
in the case that the manufacturer that has sold said energy saving control means is different from the manufacturer that has sold said special price exclusive apparatus,
the entirety of, or a part of, said added fee is paid to the manufacturer that has sold said energy saving control means and/or to the manufacturer that has sold said special price exclusive apparatus.

The 5th invention of the present invention a power consumption system according to 1st invention, wherein saidpower management means holds information concerning the degree of energy savings of said special price exclusive apparatus and said fee charging means determines the amount of additional charge to be added based on said information concerning the degree of energy savings.

The 6th invention of the present invention a power consumption system according to any of 2nd to 4th inventions,
wherein said power management means holds information concerning the degree of energy savings of said operational means and/or information concerning the degree of energy savings of said energy saving control means and said fee charging means determines said amount of additional charge based on said information concerning the degree of energy savings of said operational means and/or said information concerning the degree of energy savings of said energy saving control means.

The 7th invention of the present invention a power consumption systemaccording to 5th or 6th inventions , comprising an automatic measurement means for preparing measurement information by adding the amount of power consumption measured by said power management means and said information concerning the degree of energy savings and for making a notification of said prepared measurement information to said fee charging means via a network.

The 8th invention of the present invention is a power consumption system according to 7th invention, wherein said network is a distribution line conveyance, the Internet, an exclusive line, a telephone line or a wireless means.

The 9th invention of the present invention is a power consumption system according to 8th invention, wherein:
said special price exclusive apparatus, said power management means and said automatic measurement means are installed at the home of said user; and
said fee charging means is installed in a management center of a power company.

The 10th invention of the present invention is a power consumption system comprising:
a mode selectable apparatus where either a special price mode that consumes power at a special price or a conventional price mode that consumes power at a conventional price are selectable at the time of purchase;
a power management means for detecting that a user is utilizing said mode selectable apparatus in said special price mode and for measuring the amount of power consumed by said mode selectable apparatus in the case that said user has purchased said mode selectable apparatus and has selected said special price mode and is utilizing said mode selectable apparatus; and
a fee charging means for charging a fee for said measured amount of power consumed that makes an additional charge to the fee in the case that said mode selectable apparatus is utilized in said special price mode,
wherein the entirety of, or a part of, said added fee is paid to the manufacturer that has sold said mode selectable apparatus.

The 11th invention of the present invention is a power consumption system comprising:
a mode selectable apparatus where either a special price mode that consumes power at a special price or a conventional price mode that consumes power at a conventional price are selectable at the time of purchase;
a power management means for detecting that a user is utilizing said mode selectable apparatus in said special price mode and for measuring the amount of power consumed by said mode selectable apparatus in the case that said user has purchased said mode selectable apparatus and has selected said special price mode and is utilizing said mode selectable apparatus; and
a fee charging means for charging a fee for said measured amount of power consumed that makes an additional charge to the fee in the case that said mode selectable apparatus is utilized in said special price mode,
wherein:
the entirety of, or a part of, said added fee is paid to the manufacturer that has sold said mode selectable apparatus;
said mode selectable apparatus has an operational means for carrying out a predetermined operation by consuming said power and
an energy saving control means for carrying out energy saving control of said operational means; and
said energy saving control means also functions as said power management means.

The 12th invention of the present invention is a power consumption system comprising:
a mode selectable apparatus where either a special price mode that consumes power at a special price or a conventional price mode that consumes power at a conventional price are selectable at the time of purchase;
an energy saving control means for carrying out energy saving control of said mode selectable apparatus;
a power management means for detecting that a user is utilizing said mode selectable apparatus in said special price mode and for measuring the amount of power consumed by said mode selectable apparatus in the case that said user has purchased said mode selectable apparatus and has selected said special price mode and is utilizing said mode selectable apparatus; and
a fee charging means for charging a fee for said measured amount of power consumed that makes an additional charge to the fee in the case that said mode selectable apparatus is utilized in said special price mode,
wherein :
the entirety of, or a part of, said added fee is paid to the manufacturer that has sold said mode selectable apparatus; and
said energy saving control means also functions as said power management means.

The 13th invention of the present invention a power consumption system according to 12th invention, wherein, in the case that the manufacturer that has sold said energy saving control means is different from the manufacturer that has sold said mode selectable apparatus, when said mode selectable apparatus is utilized in said special price mode,
the entirety of, or a part of, said added fee is paid to the manufacturer that has sold said energy saving control means and/or to the manufacturer that has sold said mode selectable apparatus.

The 14th invention of the present invention is a power consumption system according to 10th invention, wherein said power management means holds information concerning the degree of energy savings of said mode selectable apparatus and said fee charging means determines said amount of additional charge based on said information concerning the degree of energy savings.

The 15th invention of the present invention is a power consumption system according to any of 11th to 13th inventions, wherein said power management means holds information concerning the degree of energy savings of said operational means and/or information concerning the degree of energy savings of said energy saving control means and said fee charging means determines said amount of additional charge based on said information concerning the degree of energy savings of said operational means and/or said information concerning the degree of energy savings of said energy saving control means.

The 16th invention of the present invention is a power consumption system according to 14th or 15th inventions , wherein comprising an automatic measurement means for preparing measurement information by adding the amount of power consumption measured by said power management means and said information concerning the degree of energy savings and for making a notification of said prepared measurement information to said fee charging means via a network.

The 17th invention of the present invention is a power consumption system according to 16th invention, wherein said network is a distribution line conveyance, the Internet, an exclusive line, a telephone line or a wireless means.

The 18th invention of the present invention is a power consumption system according to 17th invention, wherein:
said mode selectable apparatus, said power management means and said automatic measurement means are installed in the home of said user; and
said fee charging means is installed in a management center of a power company.

The 19th invention of the present invention is a power consumption system according to 9th or 18th inventions, comprising a display means installed in the home of said user, which receives said measurement information prepared by said automatic measurement means, which converts said added amount of power consumption into a fee based on said measurement information and which displays the fee.

The 20th invention of the present invention is a power consumption system according to any of 2nd to 4th, 6th, 11th to 13th and 15th inventions, wherein:
said energy saving control means has a human body detection means for detecting whether or not a human body is present and a security means for giving notification in order for crime prevention or for disaster prevention based on said detection result; and
said energy saving control means carries out said energy saving control based on said detection result.

The 21st invention of the present invention is a power consumption system comprising:
an apparatus for carrying out a predetermined operation by consuming power;
a human body detection sensor for detecting whether or not a human body is present;
an energy saving control means for carrying out energy saving control of said apparatus based on said detection result; and
a security means for giving notification in order for crime prevention or for disaster prevention based on said detection result.

The 22nd invention of the present invention is a medium for containing a program and/or data which allow a computer to carry out the entirety of, or a part of, the functions of the entirety of, or a part of, a power consumption system according to any of 1st to 21st inventons, said medium can be processed by a computer.

The 23rd invention of the present invention is an information assembly characterized by being a program and/or data which allow a computer to carry out the entirety of, or a part of, the functions of the entirety of, or a part of, a power consumption system according to any of 1st to 21st inventions.

### BRIEF DESCRIPTION OF THE DRAWINGS

Fig 1 is a drawing showing a configuration of a power consumption system according to the first embodiment of the present invention;
Fig 2 is a diagram for describing an example of a special price exclusive air conditioner in comparison with a conventional air conditioner according to the first embodiment of the present invention;
Fig 3 is a diagram showing the relationships among the user 25, the manufacturer 26 and the power company 13 according to the first and the second embodiments of the present invention;
Fig 4 is a diagram showing a configuration of a power consumption system according to the second embodiment of the present invention;
Fig 5 is a diagram showing examples of a special price mode and a conventional price mode of a mode selectable air conditioner according to the second embodiment of the present invention; and
Fig 6 is a diagram showing a configuration of a power consumption system according to the third embodiment of the present invention.

### Description of Symbols

- 1: home
- 2: automatic measurement device
- 3: distribution board
- 4: power management unit
- 5: special price exclusive air conditioner
- 6: power management unit
- 7: conventional air conditioner
- 8: STB
- 9: television
- 10, 11, 12: electric light line
- 13: power company
- 14: communication means
- 15: user management means
- 16: user information database
- 17: fee charging means
- 18: payment means
- 19: relay device
- 20: distribution line
- 21: optical fiber
- 22: power management unit
- 23: mode selectable air conditioner
- 25: user
- 26: manufacturer
- 30: purchase
- 31: payment of purchase price
- 32: power consumption
- 33: payment of added power fee
- 34: payment of a portion of added power fee
- 50: apparatus control adaptor
- 51: apparatus control adaptor

### PREFERRED EMBODIMENTS OF THE INVENTION

In the following the embodiment for carrying out the present invention are described in reference to the drawings.

### (First Embodiment)

First, the first embodiment is described.

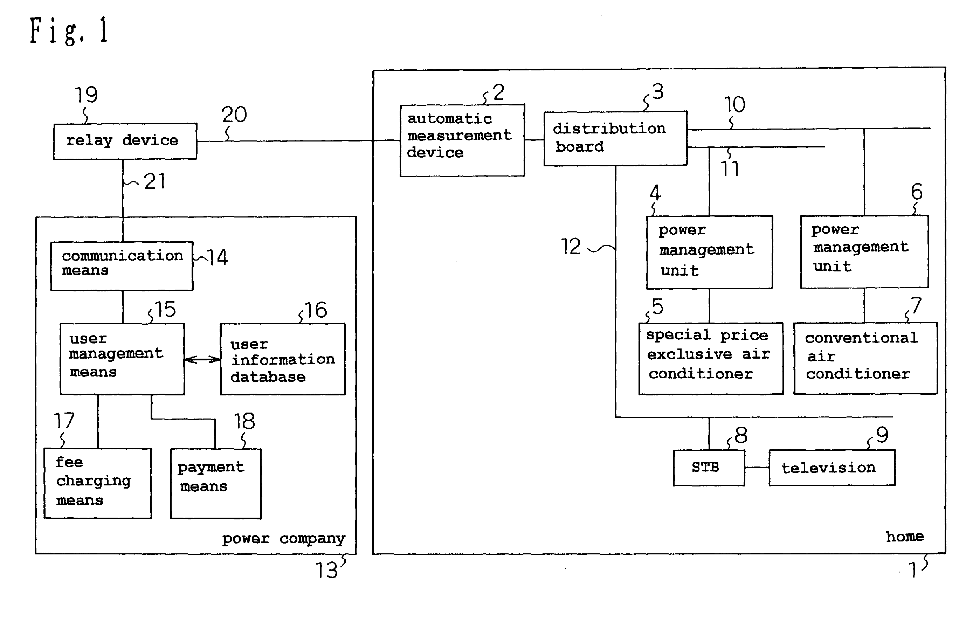

Fig 1 shows a configuration of the power consumption system according to the present embodiment.

A power consumption system according to the present embodiment is installed in a home 1 and in a power company 13. Electricity is relayed between the home 1 and the power company 13 by means of a distribution line 20, a relay device 19 and an optical fiber 21. In actuality, the home 1 exists in a plurality. That is to say, a number of homes to which the power company 13 supplies electricity correspond to the home 1.

In the home 1, an automatic measurement device 2, a distribution board 3, a power management unit 4, a special price exclusive air conditioner 5, a power management unit 6, a conventional air conditioner 7, an STB 8, a television 9 and electric light lines 10, 11 and 12 are provided.

The automatic measurement device 2 is a device that measures the amount of power consumed in the home 1 and prepares measurement information, which is automatically transmitted to a communication means 14 of the power company 13 via the relay device 19 by means of distribution line conveyance utilizing the distribution line 20.

The distribution board 3 is a means that divides the power transmitted from the power company 13 via the distribution line 20 and that functions as an electric leak breaker.

The electric light lines 10, 11 and 12 are conductive lines for supplying power divided by the distribution board 3 to the power management unit 6, the power management unit 4 and the STB 8, respectively.

The power management unit 4 is a means that measures the power consumed by the special price exclusive air conditioner 5 and sends a notification of the measurement result to the automatic measurement device 2 by means of electric light line conveyance utilizing the electric light line 11 and, at the same time, maintains information concerning the degree of energy savings of the special price exclusive air conditioner 5 and thereby controls the special price exclusive air conditioner 5.

The special price exclusive air conditioner 5 is an energy saving-type air conditioner of which the power consumption is small and is an air conditioner that is sold to the user at a special price and is of a low price. Next, in the following, the special price exclusive air conditioner 5 is described.

The power management unit 6 is a means that measures the power consumed by the conventional air conditioner 7 and sends a notification of the measurement result to the automatic measurement device 2 by means of electric light line conveyance utilizing the electric light line 10 and, thereby, controls the conventional air conditioner 7.

The conventional air conditioner 7 is an air conditioner sold at a conventional retail price. Next, in the following, the conventional air conditioner 7 is described.

The STB 8 is a set top box having a function that receives the measurement information sent from the automatic measurement device 2 by means of electric light line conveyance utilizing the electric light line 12 and translates, based on the measurement information, the amount of power consumed into a fee which is displayed on the television 9.

In the power company 13, a communication means 14, a user management means 15, a user information database 16, a fee charging means 17 and a payment means 18 are installed.

The communication means 14 is a means that receives measurement information from the automatic measurement device 2 via the optical fiber 21, the relay device 19 and the distribution line 20.

The user management means 15 is a means that stores the measurement information sent from each home, such as the home 1, in the user information database 16 and, in addition, that manages the user information, such as whether or not the electricity fee has already been paid, by storing and updating the user information.

The user information database 16 is a database for storing measurement information sent from each home, such as the home 1, and the user information of whether or not the electricity fee has already been paid.

The fee charging means 17 is a means that charges the fee to the user based on the measurement information and on the user information stored in the user information database 16 where the fee is charged, without addition, for the amount of power consumed by apparatuses such as the conventional air conditioner 7 or the STB 8 and the fee is charged, with addition, for the amount of power consumed by the special price exclusive air conditioner 5.

The payment means 18 is a means that pays a portion of the amount of money charged to the user which results from the added fee to a manufacturer which has sold the special price exclusive air conditioner 5.

In addition, the relay device 19 is a device which receives a signal sent by utilizing the distribution line conveyance that is transferred to the optical fiber 21 and, contrarily, transfers a signal sent from the optical fiber 21 to the distribution line 20 by utilizing the distribution line conveyance.

Here, the special price exclusive air conditioner 5 of the present embodiment is an example of a special price exclusive apparatus of the present invention, the power management unit of the present embodiment is an example of a power management means of the present invention, an automatic measurement device 2 of the present embodiment is an example of an automatic measurement means of the present invention and the STB 8 and the television 9 of the present embodiment are example of a display means of the present invention.

Next, the operation of the present embodiment in the above is described.

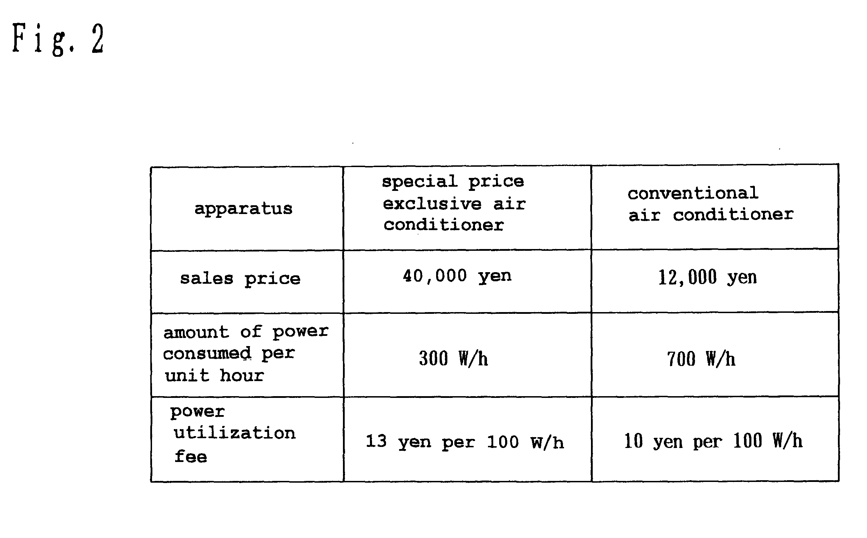

First, as described above, Fig 2 shows an examples of a special price exclusive air conditioner 5 and a conventional air conditioner 7.

The special price exclusive air conditioner 5 is sold at a retail price of 40,000 yen and the amount of power consumed per unit hour is 300 w/h. Contrarily, the conventional air conditioner 7 is sold at a retail price of 120,000 yen and the amount of power consumed per unit hour is 700 w/h. In addition, the functions of the air conditioner, such as cooling performance and heating performance of special price exclusive air conditioner 5 and the conventional air conditioner 7 are approximately the same.

In actuality, the amount of power consumed by an air conditioner fluctuates due to the size of the rooms of the home 1, the environment of the home 1 such as whether or not the home 1 is a house constructed of wood or a house constructed of reinforced concrete and the outside air temperature or the temperature set for cooling or heating. For ease of understanding, however, the description is given under the assumption that the amount of power consumed per unit hour has a fixed value as described above. Then, when the actual air conditioner is utilized, the amount of power consumed per unit hour as described above may be translated as representing the average value of the amount of power consumed per unit hour.

In this manner, even though the performance as an air conditioner of the special price exclusive air conditioner 5 is approximately the same as that of the conventional air conditioner 7, it is sold at a retail price that is half, or less, the price of the conventional air conditioner 7 and the amount of power consumed per unit hour is also half or less.

In addition, the conventional air conditioner 7 has already been purchased by the user of the home 1 and is in use in the home 1. Then, since the special price exclusive air conditioner 5 is a new product, the user is presently considering purchasing it.

In addition, the fee charged by the power company at the time when the power is utilized is conventionally 10 yen per 100 w/h.

The electricity fee for the electricity consumed by utilizing the conventional air conditioner 7 is 10 yen per 100 w/h, which is a conventional price. Contrarily, the electricity fee for the electricity consumed by utilizing the special price exclusive air conditioner 5 becomes 13 yen per 100 w/h, which is a conventional price, by adding 3 yen per 100 w/h.

That is to say, the electricity fee per unit hour for the portion consumed by utilizing the special price exclusive air conditioner 5 is higher than the electricity fee per unit hour for the portion consumed by utilizing the conventional air conditioner 7 by the amount that is added.

Though the power utilization fee per unit hour for the special price exclusive air conditioner 5 is comparatively more expensive than that for the conventional air conditioner 7, when the special price exclusive air conditioner 5 is utilized, the amount of power consumed per unit hour becomes smaller than when the conventional air conditioner 7 is utilized. Accordingly, as a result, the fee amount paid to the power company by the user becomes smaller when the special price exclusive air conditioner 5 is utilized than when the conventional air conditioner 7 is utilized. For example, an electricity fee in the case that the special price exclusive air conditioner 5 is utilized for 8 hours becomes 8 (hours) × 13 (yen) × 300 (w/h) / 100 (w/h) = 312 yen. On the other hand, the electricity fee in the case that the conventional air conditioner 7 is utilized for 8 hours becomes 8 (hours) × 10 (yen) × 700 (w/h) / 100 (w/h) = 560 yen. Accordingly, the electricity fee becomes 248 yen cheaper when the special price exclusive air conditioner 5 is utilized.

Then, the power company 13 pays, to the manufacturer, a portion of the added fee of the electricity fee paid by the user who utilizes the special price exclusive air conditioner 5. Accordingly, even in the case that the manufacturer has sold the special price exclusive air conditioner 5 at a low price, the power company pays, to the manufacturer, a portion of a fee paid to the power company by the user and, therefore, the manufacturer does not incur a loss. In the above, the examples of the special price exclusive air conditioner 5 and the conventional air conditioner 7 are described.

Next, the operation of such a special price exclusive air conditioner 5 when it is purchased by a user, installed in the home 1 and utilized is described.

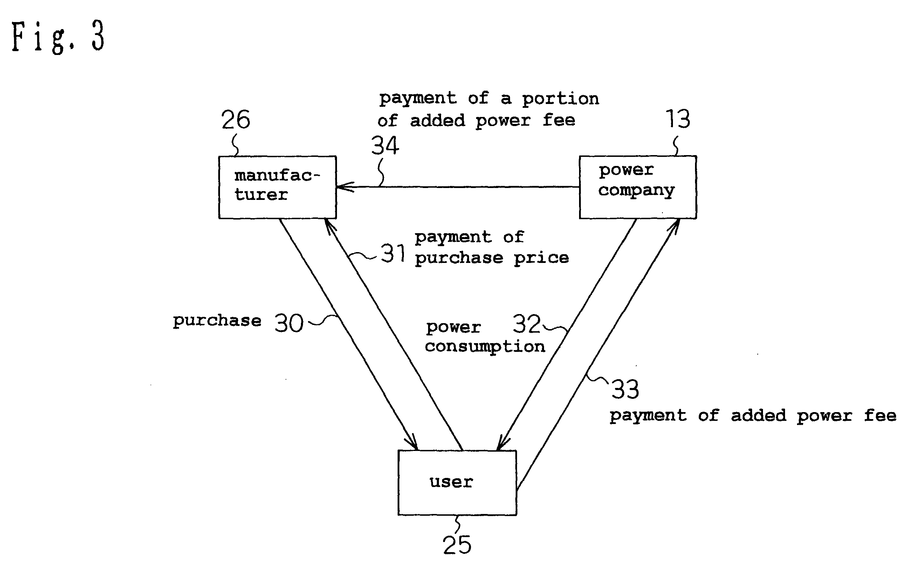

Fig 3 shows an interaction among the manufacturer 26, the user 25 in the home 1 and the power company 13.

The manufacturer 26 posts air conditioners for sale on a web page of the Internet and examines the order form.

The user 25 views the web page of the manufacturer 26 and considers the purchase of a new air conditioner. As described above, the special price exclusive air conditioner 5 can be purchased at a lower price than the conventional air conditioner 7, the performance as an air conditioner is equal and the electricity fee paid to the power company is reduced and, therefore, the user decides to purchase the special price exclusive air conditioner 5.

The user 25 downloads the order form of the web page into their own personal computer and fills in their name, address, method of payment, desired delivery date and time, desired installation date and time of the air conditioner, and the like, in the order form and transfers it to the web server of the manufacturer 26.

In this manner, the user 25 purchases the energy saving type special price exclusive air conditioner 5 at a lower price than the conventional air conditioner 7 as shown as purchase 30 in Fig 3. In addition, as shown as payment of the purchase price 31 in Fig 3, the user 25 pays the purchase price in accordance with the method of payment designated on the order form. As for such a method of payment of the purchase price, payment, for example, by means of a credit card utilizing the Internet or payment utilizing electronic money can be carried out.

The manufacturer 26 delivers a special price exclusive air conditioner 5 to the home 1 on the desired delivery date and at the desired delivery time designated by the user 25 based on the order form sent from the user 25 of the home 1. Then, the manufacturer 26 installs the delivered special price exclusive air conditioner 5 on the desired date and at the desired time of the installation of the air conditioner.

At the time of the installation of the air conditioner the installation staff install the special price exclusive air conditioner 5 in the home 1 and, at the same time, connect a power management unit 4 to the special price exclusive air conditioner 5. Then, the installation staff initializes the power management unit 4. That is to say, information concerning the degree of energy savings of the special price exclusive air conditioner 5 is set. As an example of the information concerning the energy savings, a ratio, as compared to the conventional air conditioner 7, is set of the amount of power consumed per unit hour. In the example of Fig 2, 300 (w/h) / 700 (w/h) = 0.43 is set. Here, the information concerning the degree of energy savings is not limited to this but, rather, information may be set concerning divided grades of the degree of the energy savings such as energy savings levels 3, 2 and 1.

When the initial setting is completed the power management unit 4 sends a notification of the installation of the special price exclusive air conditioner 5 and information concerning the degree of energy savings to the automatic measurement device 2 by means of electric light line conveyance utilizing the electric light line 11.

When the automatic measurement device 2 receives the notification of the installation of the special price exclusive air conditioner 5 from the power management unit 4, it transmits the notification to the communication means 14 of the power company 13.

That is to say, the automatic measurement device 2 outputs the notification to the distribution line 20 by utilizing the distribution line conveyance and, then, the relay device 19 receives the notification. In addition, the relay device 19 outputs the notification to the optical fiber 21.

The communication means 14 receives the notification from the optical fiber 21. Then, the communication means 21 outputs the received notification to the user management means 15.

When the user management means 15 receives the notification from the communication means 14, it updates the user information of the user 25 in the home 1. That is to say, information concerning the commencement of the usage of the special price exclusive air conditioner 5 by the user 25 and concerning the degree of energy savings of the special price exclusive air conditioner 5 is stored in the user information database 16.

In addition, the user management means 15 sends notification that the special price exclusive air conditioner 5 has become operable to the communication means 14 when the update of the user information database 16 has been completed.

The communication means 14 sends this notification to the power management unit 4 by following the route opposite to that described above.

When the power management unit 4 receives the notification sent from the communication means 14 it converts to the operable condition. That is to say, the power supply to the special price exclusive air conditioner 5 is started. In this manner, it becomes possible for the user 25 to utilize the special price exclusive air conditioner 5.

Power is supplied to the home 1 from the power company 13 by utilizing the distribution line 20. While the total amount of power consumed is being supplied to the home 1, it is measured by the automatic measurement device 2 and this power is supplied to the distribution board 3.

Then, this power is divided at the distribution board 3 so as to be supplied to each of the electric light lines 10, 11 and 12.

The power supplied to the electric light line 11 is supplied to the special price exclusive air conditioner 5, while the amount of power consumed is measured by the power management unit 4.

The special price exclusive air conditioner 5 operates by consuming the power supplied via the power management unit 4 in this manner. That is to say, the special price exclusive air conditioner 5 operates by consuming the power supplied from the power company 13 as the power consumption 32 in Fig 3.

In the same manner, the conventional air conditioner 7 operates by consuming the power supplied via the power management unit 6 from the electric light line 10. At this time, the power management unit 6 measures the power consumed by the conventional air conditioner 7.

In addition, the power divided into the electric light line 12 is supplied to the STB 8 and to the television 9. Then, by receiving this power supply, the STB 8 and the television 9 operate.

At the time when the special price exclusive air conditioner 5 is utilized, first, the user starts the special price exclusive air conditioner 5 by operating the remote control of the special price exclusive air conditioner 5. Then, as described above, the special price exclusive air conditioner 5 starts operating by consuming the power supplied via the power management unit 4.

The power management unit 4 measures the amount of power consumed by the special price exclusive air conditioner 5 and sends the notification of the amount of power consumed by the special price exclusive air conditioner 5 to the automatic measurement device 2 for every predetermined period of time, for example once every 30 seconds, by means of electric light line conveyance.

The automatic measurement device 2 adds up the amount of power consumed by the special price exclusive air conditioner 5 for every predetermined period of time upon receiving the notification sent by the power management unit 4.

In the same manner, the power management unit 6 sends the notification of the amount of power consumed by the conventional air conditioner 7 to the automatic measurement device 2 for every predetermined period of time, for example once for every 30 seconds, by means of electric light line conveyance.

The automatic measurement device 2 adds up the amount of power consumed by the conventional air conditioner 7 for every predetermined period of time upon receiving the notification sent from the power management unit 6.

Though the amount of power consumed by the STB 8 and by the television 9 cannot be directly measures because the power management unit is not installed, it can be found by subtracting the amount of power consumed by the special price exclusive air conditioner 5 and by the conventional air conditioner 7 from the total amount of power measured by the automatic measurement device 2.

In this manner, the automatic measurement device 2 adds up the amount of power consumed by the special price exclusive air conditioner 5, the amount of power consumed by the conventional air conditioner 7 and the amount of power consumed by other apparatuses and sends the notification of the amount of power consumed to the communication means 14 for every predetermined period of time, for example once per day, by means of distribution line conveyance.

In addition, the automatic measurement device 2 sends the notification of the total amount of power consumed or of information concerning the degree of energy savings of the special price exclusive air conditioner 5 to the STB 8 by means of electric light line conveyance. The STB 8 calculates the electricity fee based on these pieces of information sent from the automatic measurement device 2 and displays it on the television 9 when receiving the indication by the user. In this manner, the electricity fee for the electricity consumed up to the present point in time for the present month or the electricity fee for individual apparatuses can be confirmed on the screen of the television 9.

On the other hand, when the communication means 14 receives the notification from the automatic measurement device 2, it is transferred to the user management means 15.

The user management means 15 updates the user information database 16 based on this notification. That is to say, the amount of power consumed, as part of the user information of the user 25 in the home 1, is updated for individual apparatuses.

The user management means 15 updates the corresponding user information of the user information database 16 when the notification of the amount of power consumed is received, which occurs once per day, from the automatic measurement device 2.

In this manner, individual apparatuses operate by consuming power in the home 1.

Then, the user management means 15 indicates the fee charging means 17 for charging the fee to the user 25 for every predetermined period of time, for example every month.

The fee charging means 17 charges the fee to the user 25 by receiving this. That is to say, the user management means 15 requires information concerning the amount of power consumed by individual apparatuses such as the special price exclusive air conditioner 5 or the conventional air conditioner 7 and information concerning the degree of energy savings of the special price exclusive air conditioner 5. The user management means 15 reads out these pieces of information from the user information database 16.

Then, as for the fee for the amount of power consumed by the conventional air conditioner 7, by the STB 8 and by the television 9, a conventional fee is applied. That is to say, as shown in Fig 2, the fee is calculated as 10 yen per 100 w/h. Contrarily, as for the fee for the amount of power consumed by the special price exclusive air conditioner 5, a fee gained by adding to the conventional fee in accordance with the information concerning the degree of energy savings is applied. For example, as shown in Fig 2, since the degree of energy savings of the special price exclusive air conditioner 5 is set at 0.43, 3 yen per 100 w/h is added in this case so that the fee is calculated as 13 yen per 100 w/h. In this manner, as for the special price exclusive air conditioner 5, the smaller the amount of power consumed per unit hour, the greater becomes the amount of charge added to the fee per 100 w/h.

In this manner, the fee charging means 17 calculates so that the fee for the amount of power consumed by the special price exclusive air conditioner 5 becomes the fee added to the fee for the electricity which would be consumed by the conventional apparatus.

The fee for the power utilized calculated in this manner is charged to the user 25 in the home 1. Then, the fee charging means 18 automatically withdraws the fee for the power utilized from a bank account, or the like, of the user 25. That is to say, as shown as the payment of the added power fee 33 in Fig 3, the user 25 pays the added fee for the amount of power consumed by the special price exclusive air conditioner 5.

The fee charging means 17 sends the notification of fee charging information such as the fee charged to the user or the existence of payment by the user to the user management means 15 and the user management means 15 updates, according to the notification, the storage of the fee charging information in the user information database 16 for each user.

On the other hand, the user 25 pays the fee for the power utilized in the present month by means of automatic withdrawal from a bank account, or the like.

Then, the payment means 18 pays a portion of the added fee to the manufacturer from among the fee for the amount of power utilized. That is to say, as shown as a partial payment 34 of the added fee for the power in Fig 3, a portion of the added fee from among the fee for the power consumed by the special price exclusive air conditioner 5 is paid to the manufacturer 26 that has sold the special price exclusive air conditioner 5.

For example, 3 yen per 100 w/h is added to the fee for the amount of power consumed by the special price exclusive air conditioner 5 and 2 yen per 100 w/h from among the above is paid to the manufacturer 26 which has sold the special price exclusive air conditioner 5.

In this manner, since the payment means 18 pays a portion of the added fee to the manufacturer 26 which has sold the special price exclusive air conditioner 5, the manufacturer 26 does not incur a loss even if the special price exclusive air conditioner 5 is sold at a price lower than cost. In addition, since the retail price is comparatively low, more special price exclusive air conditioner 5 can be sold.

In addition, since the special price exclusive air conditioner 5 is sold at a low price, a user can purchase the special price exclusive air conditioner 5 without putting the household budget under pressure. Furthermore, when the user purchases and utilizes the special price exclusive air conditioner 5, the fee for the power utilized is set by making an addition in accordance with the degree of energy savings and the amount of power consumed by the special price exclusive air conditioner 5 itself is reduced in comparison with the conventional apparatus and, therefore, the fee for the power utilized to be paid by utilizing the special price exclusive air conditioner 5 becomes less in comparison with that before the utilization.

In addition, the power company 13 can receive payment from the user 25 by making an addition to the fee per 100 w/h through the utilization of the special price exclusive air conditioner 5 by the user 25 and, therefore, their profit increases even if a portion thereof is paid to the manufacturer 26.

In addition, an air conditioner which consumes a smaller amount of power is sold as a special price exclusive air conditioner 5 in the above manner and, thereby, energy saving-type air conditioners can swiftly come into wide usage. That is to say, the purchase of and the replacement by air conditioners that consume less power increases at each home resulting in the reduction of the total amount of power consumption. Accordingly, in the case that the power consumption system of the present embodiment is utilized the efficient usage of energy resources can be advanced.

Here, a special price exclusive apparatus of the present invention is not limited to the special price exclusive air conditioner 5 according to the present embodiment but, rather, maybe an apparatus which consumes power and performs the function thereof, such as a washing machine, a television or a personal computer.

In addition, though in the present embodiment the power management unit 6 is provided in the conventional air conditioner 7, the power management unit 6 may not be provide in the conventional air conditioner 7. In this case, though the amount of power consumed by the conventional air conditioner 7 cannot be measured, the amount of power consumed by the special price exclusive air conditioner 5 can be measured and the total amount of power consumed in the home 1 can also be measured so that the power utilization fee can be calculated without hindrance. In short, the power management unit may, at least, be installed for each of the special price exclusive air conditioners 5.

In addition, though in the present embodiment information concerning the degree of energy savings is described as a ratio of the amount of power consumed per unit hour in comparison with the conventional air conditioner which has a similar level of performance, the present invention is not limited to this. Information concerning the degree of energy savings may be information concerning classification of the degree of energy savings, such as energy saving levels 3, 2 or 1. In this case, the higher the grade is, the higher the effect of energy savings is, or vice versa. In short, the information concerning the degree of energy savings may only be information that represents with numerals and/or symbols the size of the effect of energy savings gained through the utilization of the apparatus.

In addition, though the special price exclusive air conditioner 5 in the present embodiment is described as an energy saving-type air conditioner of which the power consumption is small in comparison with the other conventional air conditioner which has a similar air conditioning performance, the present invention is not limited to this. The special price exclusive air conditioner 5 may consume a similar amount of power in comparison with the other conventional air conditioner which has a similar air conditioning performance. In such a case, though power resources cannot be efficiently utilized, a user 25 can easily purchase a special price exclusive air conditioner 5 in the same manner. The manufacturer 26 can also sell more air conditioners.

In addition, though in the present embodiment the retail price and the power utilization fee of the special price exclusive air conditioner 5 is described as being set as shown in Fig 2, the present invention is not limited to this. The retail price may be higher than in the example of Fig 2 while the power utilization fee may be lower than in the example of Fig 2 or the retail price may be lower than in the example of Fig 2 while the power utilization fee may be higher than in the example of Fig 2. In short, the retail price and the power utilization fee may be set in any manner as long as all of, or some of, the manufacturer 26, the user 25 and the power company 13 gain a benefit.

In addition , though the fee per unit hour for power consumed through the utilization of the special price exclusive air conditioner 5 is gained by making an addition to the fee for power consumed through the utilization of the conventional air conditioner 7, the fee per unit hour for the power may remain constant while the fee for the amount of power consumed itself may be added.

In addition, though in the present embodiment a portion of the added fee from among the fee for power consumed by the special price exclusive air conditioner 5 is paid to the manufacturer 26, the present invention is not limited to this. The entirety of the added fee may be paid to the manufacturer 26.

In addition, though in the present embodiment the special price exclusive air conditioner 5 is described as being sold to the user 25 at a low price, the present invention is not limited to this. The special price exclusive air conditioner 5 may be provided free of charge to the user 25. In this case, an extra addition to the fee for the power consumed by the special price exclusive air conditioner 5 may be made or the fee paid to the manufacturer 26 from among the added fee may be increased so that the manufacturer 26 that has provided the special price exclusive air conditioner 5 free of charge does not incur a loss and, thereby, similar effects can be gained as in the present embodiment. Or, when the special price exclusive air conditioner 5 is provided to the user 25 free of charge, the conventional air conditioner 7 that has already been installed in the home 1 of the user 25 may be replaced by it.

### (Second Embodiment)

Next, the second embodiment is described.

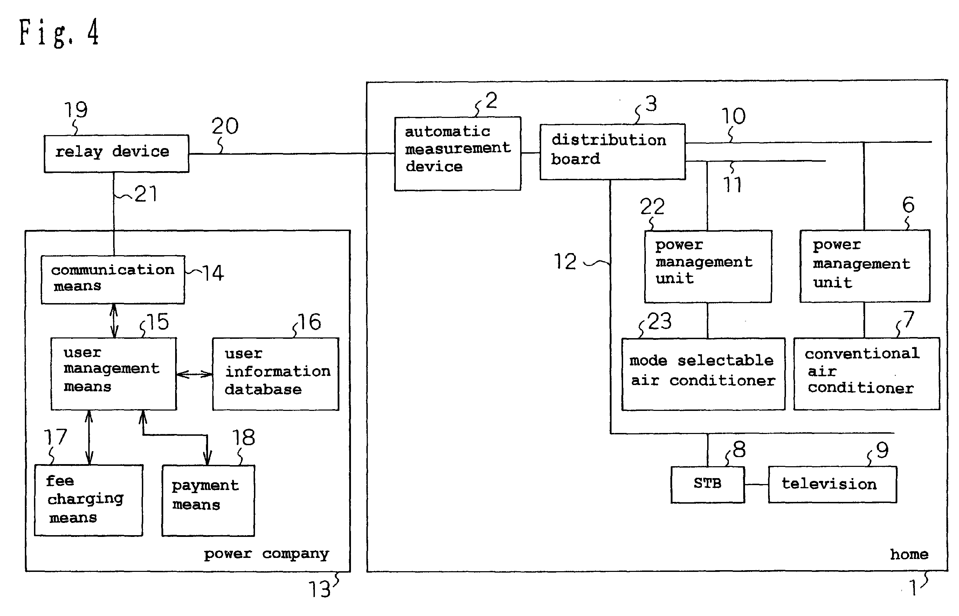

Fig 4 shows a configuration of a power consumption system of the present embodiment. The power consumption system of the present embodiment is provided with a power management unit 22 and a mode selectable air conditioner 23 instead of the power management unit 4 and the special price exclusive air conditioner 5 of the power consumption system of the first embodiment, respectively. The other parts are the same as in the first embodiment.

The embodiment selectable air conditioner 23 is an energy saving-type air conditioner that can select at the time of purchase either a special price embodiment where power is consumed at a special price or a conventional price mode where power is consumed at a conventional price and of which the amount of power consumed is small in comparison with a conventional apparatus.

The power management unit 22 measures the power consumed by the mode selectable air conditioner 23 so as to make notification of the measurement result to the automatic measurement device 2 via the electric light line 11 by means of electric light line conveyance and maintains information concerning the degree of energy savings of the mode selectable air conditioner 23 and information indicating whether the mode selectable air conditioner 23 is utilized in a special price mode or is utilized in a conventional price mode so as to transmit, if necessary, these pieces of information to the automatic measurement device 2 or serves as a means of controlling the mode selectable air conditioner 23.

The conventional air conditioner 7 is an air conditioner sold at a conventional retail price.

The other parts are the same as in the first embodiment, of which the descriptions are omitted.

Here, the mode selectable air conditioner 23 of the present embodiment is an example of a mode selectable apparatus of the present invention, the power management unit 22 of the present embodiment is an example of a power management means of the present invention and the automatic measurement device 2 of the present embodiment is an example of an automatic measurement means of the present invention.

Next, the operation of the present embodiment in the above manner is described focusing on the difference between the present embodiment and the first embodiment.

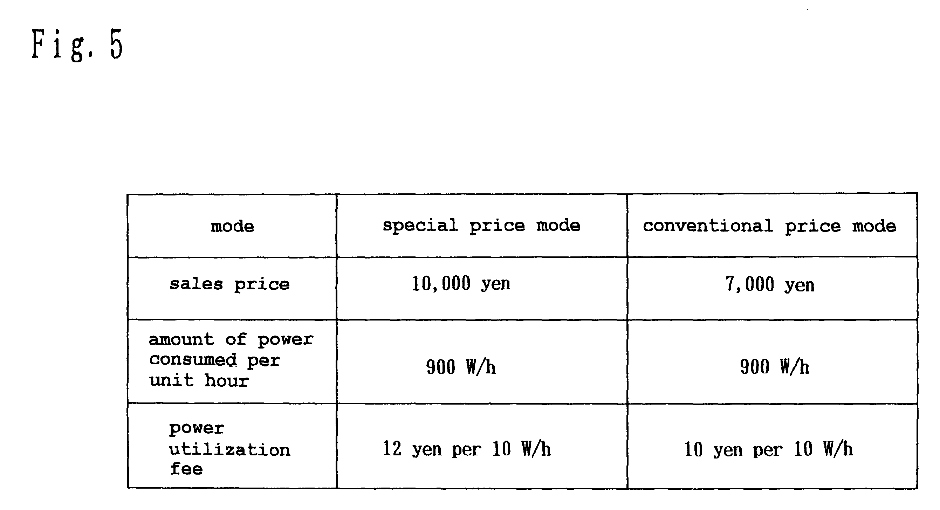

First, Fig 5 shows examples of the two modes of the mode selectable air conditioner 23.

That is to say, in the case that the user has purchased the mode selectable air conditioner 23 and has selected the special price mode at the time of purchase, the mode selectable air conditioner 23 is sold at a price of 10,000 yen. Contrarily, in the case that the user has purchased the mode selectable air conditioner 23 and has selected the conventional price mode at the time of purchase, the mode selectable air conditioner 23 is sold at a price of 70,000 yen. That is to say, the mode selectable air conditioner 23 can be purchased at a lower price when the special price mode is selected than when the conventional price mode is selected.

In addition, the amount of power consumed per unit hour at the time when the mode selectable air conditioner 23 operates is 900 w/h in both the case where the special price mode is selected and the case where the conventional price mode is selected. That is to say, the performance and the function of the mode selectable air conditioner 23 are the same when either the special price mode or the conventional price mode is selected.

In addition, the power utilization fee in the case that the mode selectable air conditioner 23 is utilized in the special price mode becomes 12 yen per 10 w/h. Contrarily, the power utilization fee in the case that the mode selectable air conditioner 23 is utilized in the conventional price mode becomes 10 yen per 10 w/h. That is to say, the power utilization fee in the case of the utilization in the special price mode becomes the fee gained by making an addition to the fee for the power utilization in the case of the utilization in the conventional price mode.

Next, the operation of the mode selectable air conditioner 23 in the above manner is described when it is purchased by a user, installed in the home 1 and utilized.

Fig 3 shows interaction among the manufacturer 26, the user 25 of the home 1 and the power company 13. The user 25 purchases the mode selectable air conditioner 23 in the special price mode. In this case, as shown as the purchase 30 in Fig 3, the user 25 purchases the mode selectable air conditioner 23 in the same manner as in the first embodiment, while selecting the special price mode.

The user 25 pays the purchase price as shown as the purchase price payment 31 when the mode selectable air conditioner 23 is purchased. As shown in Fig 5, in the case that the mode selectable air conditioner 23 is purchased in the special price mode, 10,000 yen is paid to the manufacturer 26 as the purchase price.

At the time of installation of the air conditioner, the installation staff installs the mode selectable air conditioner 23 in the home 1 and, at the same time, connects the power management unit 22 to the mode selectable air conditioner 23.

Then, the installation staff initializes the power management unit 22. In this initialization the mode selectable air conditioner 23 is set so as to be utilized in the special price mode in addition to the initialization carried out in the first embodiment.

When the initialization is completed the power management unit 22 makes a notification to the automatic measurement device 2 by means of electric light line conveyance that the mode selectable air conditioner 23 has been installed, of information concerning the degree of energy savings thereof and that it is being utilized in the special price mode.

Subsequent to that, the mode selectable air conditioner 23 can be utilized in the same manner as in the first embodiment.

That is to say, the mode selectable air conditioner 23 operates by consuming power as shown as the power consumption 32 in Fig 3.

When the mode selectable air conditioner 23 is utilized in the special price mode, 2 yen is added to the power utilization fee per 10 w/h. That is to say, the fee charging means 17 charges 12 yen per 10 w/h.

The user 25 pays the power utilization fee as shown as the payment of the added fee for power 33.

Then, as shown as a partial payment of the added fee for power 34 in Fig 3, the payment means 18 pays a portion of the added fee from among the power utilization fee that the fee charging means 17 has charged to the manufacturer 26 that has sold the mode selectable air conditioner 23 in the special price mode.

The mode selectable air conditioner 23 is an energy saving-type apparatus in the same manner as in the first embodiment and, therefore, has the same effects as in the first embodiment.

In addition, at the time when the air conditioner is purchased from the manufacturer 26, the user 25 selects whether it is purchased in the special price mode or purchased in the conventional price mode and, therefore, the number of choices concerning the purchase of home electronics can be made greater such that in the case where the user 25 cannot provide a considerable amount of money at one time, the purchase in the special price mode is selected or in the case where a considerable amount of money can be provided the purchase in the conventional price mode is selected.

Here, a mode selectable apparatus of the present invention is not limited to the mode selectable air conditioner 23 according to the present embodiment but, rather, may be an apparatus that consumes power and performs the function thereof, such as a washing machine, a television or a personal computer.

In addition, though in the present embodiment the power management unit 6 is provided for the conventional air conditioner 7, the power management unit 6 may not be provided for the conventional air conditioner 7. In short, the power management unit may, at least, be installed for each of the mode selectable air conditioners.

In addition, though a portion of the added fee from among the fee for the power consumed by the special price exclusive air conditioner 5 or by the mode selectable air conditioner 23 is described as to be paid to the manufacturer 26 in the present embodiment, the present invention is not limited to this. The entirety of the added fee may be paid to the manufacturer 26.

### (Third Embodiment)

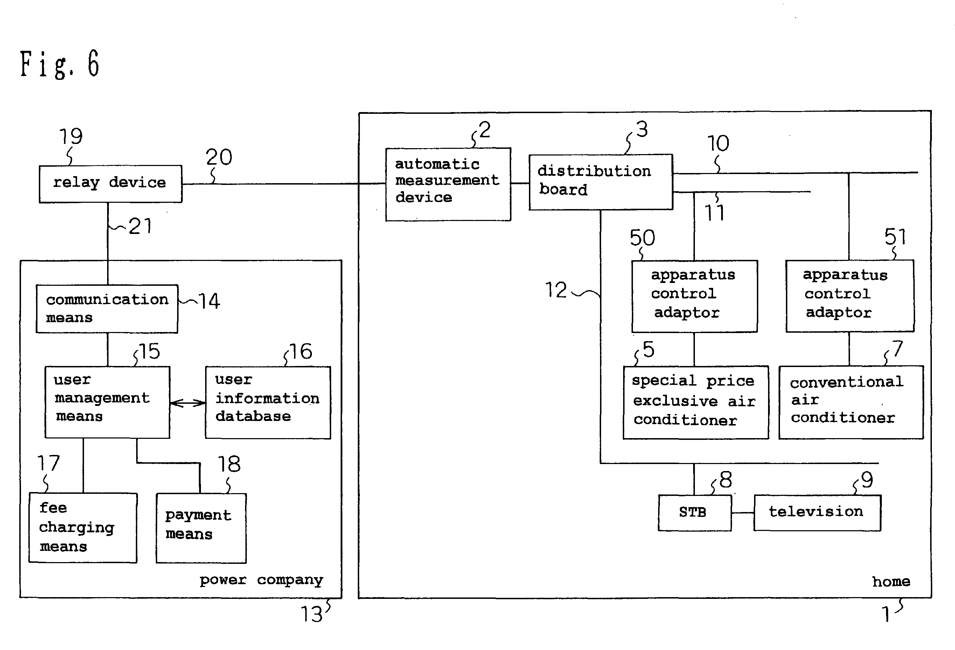

Next, the third embodiment is described. Fig 6 shows a configuration of a power consumption system of the present embodiment. The power consumption system of the present embodiment comprises apparatus control adaptors 50 and 51 in place of the power management units 4 and 6 of the power consumption system of the first embodiment, respectively. Other parts are the same as in the first embodiment.

The apparatus control adaptor 50 is an apparatus which can carry out energy saving control for further reducing power consumption of the special price exclusive air conditioner 5 by controlling the operation of the special price exclusive air conditioner 5 in addition to the function of the power management unit 4 of the first embodiment.

In a similar manner, the apparatus control adaptor 51 is an apparatus that can carry out energy saving control for reducing the power consumption of the conventional air conditioner 7 by controlling the operation of the conventional air conditioner 7 in addition to the function of the power management unit 6 of the first embodiment.

The apparatus control adaptors 50 and 51 comprise, respectively, a human body detection sensor and a security means.

That is to say, the apparatus control adaptors 50 and 51 are installed respectively in different rooms of the home 1 and the human body detection sensors are sensors that detect whether or not a human body exists in the rooms where they are respectively installed.

In addition, the security means are the means which make a notification for the purpose of crime prevention and disaster prevention based on the detection results of the human body detection sensors.

In addition, the apparatus control adaptors 50 and 51, respectively, carry out energy saving control based on the detection results of the human body detection sensors.

Other parts are the same as in the first embodiment, of which the descriptions are omitted.

Here, the apparatus control adaptor 50 and the special price exclusive air conditioner 5 of the present embodiment are examples of a special price exclusive apparatus of the present invention, the apparatus control adaptor 51 and the conventional air conditioner 7 of the present embodiment are an example of a special price exclusive apparatus of the present invention, the special price exclusive air conditioner 5 of the present embodiment is an example of a special price exclusive apparatus of the present invention, an apparatus control adaptor 50 of the present embodiment is an example of a power management means of the present invention, the apparatus control adaptor 51 of the present embodiment is an example of a power management means of the present invention, the apparatus control adaptor 50 of the present embodiment is an example of an energy saving control means of the present invention, the apparatus control adaptor 51 of the present embodiment is an example of an energy saving control means of the present invention and the human body detection sensors of the present embodiment are examples of a human body detection means of the present invention.

Next, the operation of the present embodiment in the above manner is described focusing on the points of difference between the first embodiment and the present embodiment.

The apparatus control adaptors 50 and 51 are sold separately from the special price exclusive air conditioner 5 and the conventional air conditioner 7. That is to say, after the installation of the special price exclusive air conditioner 5 or of the conventional air conditioner 7 within the home 1, the user 25 purchases the apparatus control adaptors 51 and 52 so as to utilize them in place of the power management units 4 and 6 of the first embodiment.

The apparatus control adaptors 50 and 51 carry out energy saving control on the special price exclusive air conditioner 5 and on the conventional air conditioner 7, respectively. That is to say, the apparatus control adaptors 50 and 51 determine whether or not a person is in a room through a signal sent from a human body detection sensor such as an infrared sensor or a camera so as to carry out a control based on whether or not a person is present such as releasing control of a temperature setting or cutting off the power at the time of long term absence.

Accordingly, in the case that the apparatus control adaptors 50 and 51 are used in place of the power management units 4 and 6 of the first embodiment, the power consumption of the special price exclusive air conditioner 5 or of the conventional air conditioner 7 is further reduced.

In this manner, the difference in the power consumption between the case where a control is exercised by using the apparatus control adaptors 5 and 6 when a person is not present and the case where a control is not exercised by using apparatus control adaptors 5 and 6 when a person is not present can be easily measured. This measurement becomes possible by predicting the air conditioner operation condition based on the room temperature and the outside air temperature at this time, by calculating the amount of power consumed that would have been utilized in the case that no control is exercised at the time of absence and by finding the difference between the calculation and the amount of power consumed actually measured by the apparatus control adaptors 4 and 5.

Here, a method of controlling energy savings is not limited to this. For example, the same effects can be expected in a method where the air conditioners are operated by the turning on and off of the high performance embodiment for every constant period of time or in a method of rotational control where a plurality of air conditioners are used in turn.

Accordingly, the portion of the added fee to the electricity fee in the case where the apparatus control adaptors 50 and 51 are utilized can be calculated out or can be set in real time.

According to the present embodiment, the difference in the amount of power consumed when utilizing the apparatus control adaptors 50 and 51 in the case of no control and the amount of power consumed by carrying out a control, that is to say, the amount of saved energy by means of the apparatus control adaptors 50 and 51 is added so as to make an addition to the electricity fee.

That is to say, the above described amount of money of saved energy is further added to the electricity fee that has been added through the utilization of the special price exclusive air conditioner 5. That is to say, in the case that the apparatus control adaptor 50 is utilized for the special price exclusive air conditioner 5, the amount of money for the saved energy by the apparatus control adaptor 50 is added to the electricity fee in addition to the amount of money of saved energy described in the first embodiment in the conventional air conditioner 7.

In addition, the above described amount of money of the saved energy through the control of the apparatus control adaptor 51 is added to the electricity fee of the conventional air conditioner 7.

Then, all of, or a part of, the electricity fee gained through the addition of the amount of money of saved energy by utilizing the apparatus control adaptors 50 and 51 is paid to the manufacturer that has sold the apparatus control adaptors 50 and 51.

As described above, whether or not a person is present in a room is detected by using a human body detection sensor so that a temperature setting of the conventional air conditioner 7 or of the special price exclusive air conditioner 5 is slightly adjusted at the time of absence and, thereby, energy saving control becomes possible. At the same time, when the user leaves the home 1 or in a room where no one is present, the human body detection sensor used for energy saving control can also be utilized as a security sensor.

That is to say, the security means makes a notification for the purpose of disaster prevention or crime prevention based on the detection results of the human body detection sensors. For example, in the case that a human body detection sensor detects an intruder to the home 1 or the occurrence of a fire, or the like, the security means sends a notification of the invasion of the intruder, of the occurrence of the fire, or the like, to a security center with which the user has made a contract in advance, based on the above detection results.

In this manner, additional energy saving effects can be gained and effects equal to those in the first embodiment can be gained. In addition, the effects of disaster prevention or crime prevention can be gained. Moreover, instead of utilizing dedicated sensors for the purpose of energy saving control and for the purpose of disaster prevention or criminal prevention, respectively, the human body detection sensors are utilized for the purpose of these objectives and it becomes possible to reduce costs.

Here, the human body detection sensors of the present embodiment may be incorporated in the apparatus control adaptor 50 or may be incorporated in the special price exclusive air conditioner 5 or in the conventional air conditioner 7. In addition, they may be installed in the home 1 separate from the apparatus control adaptors 50 and 51, the special price exclusive air conditioner 5 and the conventional air conditioner 7.

In addition, though, according to the present embodiment, the apparatus control adaptors 50 and 51 are described as being purchased and utilized after the special price exclusive air conditioner 5 and the conventional air conditioner 7 have been purchased, the present invention is not limited to this. The apparatus control adaptor 50 may be purchased at the same time that the special price exclusive air conditioner 5 is purchased. In addition, the apparatus control adaptor 51 may be purchased at the same time that the conventional air conditioner 7 is purchased.

In addition, the apparatus control adaptors 50 and 51 may, respectively, be incorporated in the special price exclusive air conditioner 5 or in the conventional air conditioner 7 or may be externally connected.

In addition, the apparatus control adaptor 50 may be utilized for the control of the mode selectable air conditioner 23 that has been described in the second embodiment. In this case, when the mode selectable air conditioner 23 is utilized in a special price mode, the electricity fee is added in the same manner as in the case where an apparatus control adaptor 50 is utilized for the special price exclusive air conditioner 5 according to the present embodiment so that the payment of the added portion may be made. In addition, in the case that the mode selectable air conditioner 23 is utilized in a conventional price mode, the electricity fee is added in the same manner as in the case where the apparatus control adaptor 51 is utilized for the conventional air conditioner 7 according to the present invention so that the payment for the added portion may be made.

In addition, according to the present embodiment, though the automatic measurement device 2 is described as transmitting measurement information to the communication means 14 by means of distribution line conveyance, the present invention is not limited to this. The automatic measurement device 2 may transmit measurement information to the communication means 14 by means of the Internet, dedicated lines, telephone lines, wireless means or other networks. In a similar manner, though the power management unit 23 makes a notification to the automatic measurement device 2 by means of electric light line conveyance in the home 1, this may be a communication through another network, such as a dedicated distribution line or wireless means.

In addition, a medium which carries a program and/or data for making a computer carry out the entirety, or a part of, the functions of the entirety of, or a part of, the means of the power consumption system or of the apparatus control device of the present invention and which is characterized by conducting processing by a computer also belongs to the present invention.

In addition, an information assembly characterized by being a program and/or data for making a computer carry out the entirety of, or a part of, functions of the entirety of, or a part of the power consumption system or of the apparatus control device of the present invention also belongs to the present invention.

In addition, the data of present invention include data structure, data format, types of data, and the like. Moreover, the medium of the present invention includes a recording medium such as a ROM, a transmission medium such as the Internet and a transmission medium such as light, radio waves or sound waves. Furthermore, the carrying medium of the present invention includes, for example, a recording medium which records a program and/or data, transmission medium for transmitting a program and/or data, or the like. In addition, conducting processing by a computer includes, for example, being able to read out by a computer in the case of a recording medium, such as a ROM, and being able to handle a program and/or data which become transmission objectives by a computer as a result of transmission in the case of a transmission medium. Furthermore, the information assembly of the present invention includes, for example, software such as a program and/or data.

In addition, a program recording medium wherein a program and/or data are recorded for making a computer carry out the entirety of, or a part of, the functions of the entirety of, or a part of, the means of a power consumption system according to any of the above embodiments is able to be read out by a computer and it may be a program recording medium where the above described program and/or data which have been read out carry out the above described functions in conjunction with said computer.

As is clear from the above description, the present invention can provide a power consumption system, an information assembly and a medium that can enable the user to purchase a piece of home electronics to be employed in order to replace the old piece of home electronics without putting pressure on the household budget.

In addition, the present invention can provide an a power consumption system, an information assembly and medium that can effectively utilize energy resources.

## Claims

1. A power consumption system comprising:
a special price exclusive apparatus which is set in advance so as to consume power at a special price;
a power management means for detecting that a user is utilizing said special price exclusive apparatus and for measuring the amount of power consumed by said special price exclusive apparatus in the case that the user has purchased and is utilizing said special price exclusive apparatus; and
a fee charging means for charging a fee for said measured amount of power consumed that makes an addition to the fee,
wherein the entirety of, or a part of, said added fee is paid to the manufacturer that has sold said special price exclusive apparatus.

2. A power consumption system comprising:
a special price exclusive apparatus which is set in advance so as to consume power at a special price;
a power management means for detecting that a user is utilizing said special price exclusive apparatus and for measuring the amount of power consumed by said special price exclusive apparatus in the case that the user has purchased and is utilizing said special price exclusive apparatus; and
a fee charging means for charging a fee for said measured amount of power consumed that makes an addition to the fee,
wherein:
the entirety of, or a part of, said added fee is paid to the manufacturer that has sold said special price exclusive apparatus;
said special price exclusive apparatus has an operational means for carrying out a predetermined operation by consuming said power and
an energy saving control means for carrying out energy saving control of said operational means; and
said energy saving control means also functions as said power management means.

3. A power consumption system comprising:
a special price exclusive apparatus which is set in advance so as to consume power at a special price;
a power management means for detecting that a user is utilizing said special price exclusive apparatus and for measuring the amount of power consumed by said special price exclusive apparatus in the case that the user has purchased and is utilizing said special price exclusive apparatus;
an energy saving control means for carrying out energy saving control of said special price exclusive apparatus; and
a fee charging means for charging a fee for said measured amount of power consumed that makes an addition to the fee,
wherein:
the entirety of, or a part of, said added fee is paid to the manufacturer that has sold said special price exclusive apparatus; and
said energy saving control means also functions as said power management means.

4. A power consumption system according to Claim 3,
wherein:
in the case that the manufacturer that has sold said energy saving control means is different from the manufacturer that has sold said special price exclusive apparatus,
the entirety of, or a part of, said added fee is paid to the manufacturer that has sold said energy saving control means and/or to the manufacturer that has sold said special price exclusive apparatus.

5. A power consumption system according to Claim 1, wherein said power management means holds information concerning the degree of energy savings of said special price exclusive apparatus and said fee charging means determines the amount of additional charge to be added based on said information concerning the degree of energy savings.

6. A power consumption system according to any of Claims 2 to 4, wherein said power management means holds information concerning the degree of energy savings of said operational means and/or information concerning the degree of energy savings of said energy saving control means and said fee charging means determines said amount of additional charge based on said information concerning the degree of energy savings of said operational means and/or said information concerning the degree of energy savings of said energy saving control means.

7. A power consumption system according to Claim 5 or 6, comprising an automatic measurement means for preparing measurement information by adding the amount of power consumption measured by said power management means and said information concerning the degree of energy savings and for making a notification of said prepared measurement information to said fee charging means via a network.

8. A power consumption system according to Claim 7, wherein said network is a distribution line conveyance, the Internet, an exclusive line, a telephone line or a wireless means .

9. A power consumption system according to Claim 8, wherein:
said special price exclusive apparatus, said power management means and said automatic measurement means are installed at the home of said user; and
said fee charging means is installed in a management center of a power company.

10. A power consumption system comprising:
a mode selectable apparatus where either a special price mode that consumes power at a special price or a conventional price mode that consumes power at a conventional price are selectable at the time of purchase;
a power management means for detecting that a user is utilizing said mode selectable apparatus in said special price mode and for measuring the amount of power consumed by said mode selectable apparatus in the case that said user has purchased said mode selectable apparatus and has selected said special price mode and is utilizing said mode selectable apparatus; and
a fee charging means for charging a fee for said measured amount of power consumed that makes an additional charge to the fee in the case that said mode selectable apparatus is utilized in said special price mode,
wherein the entirety of, or a part of, said added fee is paid to the manufacturer that has sold said mode selectable apparatus.

11. A power consumption system comprising:
a mode selectable apparatus where either a special price mode that consumes power at a special price or a conventional price mode that consumes power at a conventional price are selectable at the time of purchase;
a power management means for detecting that a user is utilizing said mode selectable apparatus in said special price mode and for measuring the amount of power consumed by said mode selectable apparatus in the case that said user has purchased said mode selectable apparatus and has selected said special price mode and is utilizing said mode selectable apparatus; and
a fee charging means for charging a fee for said measured amount of power consumed that makes an additional charge to the fee in the case that said mode selectable apparatus is utilized in said special price mode,
wherein:
the entirety of, or a part of, said added fee is paid to the manufacturer that has sold said mode selectable apparatus;
said mode selectable apparatus has an operational means for carrying out a predetermined operation by consuming said power and
an energy saving control means for carrying out energy saving control of said operational means; and
said energy saving control means also functions as said power management means.

12. A power consumption system comprising:
a mode selectable apparatus where either a special price mode that consumes power at a special price or a conventional price mode that consumes power at a conventional price are selectable at the time of purchase;
an energy saving control means for carrying out energy saving control of said mode selectable apparatus;
a power management means for detecting that a user is utilizing said mode selectable apparatus in said special price mode and for measuring the amount of power consumed by said mode selectable apparatus in the case that said user has purchased said mode selectable apparatus and has selected said special price mode and is utilizing said mode selectable apparatus; and
a fee charging means for charging a fee for said measured amount of power consumed that makes an additional charge to the fee in the case that said mode selectable apparatus is utilized in said special price mode,
wherein :
the entirety of, or a part of, said added fee is paid to the manufacturer that has sold said mode selectable apparatus; and
said energy saving control means also functions as said power management means.

13. A power consumption system according to Claim 12, wherein, in the case that the manufacturer that has sold said energy saving control means is different from the manufacturer that has sold said mode selectable apparatus, when said mode selectable apparatus is utilized in said special price mode,
the entirety of, or a part of, said added fee is paid to the manufacturer that has sold said energy saving control means and/or to the manufacturer that has sold said mode selectable apparatus.

14. A power consumption system according to Claim 10, wherein said power management means holds information concerning the degree of energy savings of said mode selectable apparatus and said fee charging means determines said amount of additional charge based on said information concerning the degree of energy savings.

15. A power consumption system according to any of Claims 11 to 13, wherein said power management means holds information concerning the degree of energy savings of said operational means and/or information concerning the degree of energy savings of said energy saving control means and said fee charging means determines said amount of additional charge based on said information concerning the degree of energy savings of said operational means and/or said information concerning the degree of energy savings of said energy saving control means.

16. A power consumption system according to Claim 14 or 15, wherein comprising an automatic measurement means for preparing measurement information by adding the amount of power consumption measured by said power management means and said information concerning the degree of energy savings and for making a notification of said prepared measurement information to said fee charging means via a network.

17. A power consumption system according to Claim 16, wherein said network is a distribution line conveyance, the Internet, an exclusive line, a telephone line or a wireless means.

18. A power consumption system according to Claim 17, wherein:
said mode selectable apparatus, said power management means and said automatic measurement means are installed in the home of said user; and
said fee charging means is installed in a management center of a power company.

19. A power consumption system according to Claim 9 or 18, comprising a display means installed in the home of said user, which receives said measurement information prepared by said automatic measurement means, which converts said added amount of power consumption into a fee based on said measurement information and which displays the fee.

20. A power consumption system according to any of Claims 2 to 4, 6, 11 to 13 and 15, wherein:
said energy saving control means has a human body detection means for detecting whether or not a human body is present and a security means for giving notification in order for crime prevention or for disaster prevention based on said detection result; and
said energy saving control means carries out said energy saving control based on said detection result.

21. A power consumption system comprising:
an apparatus for carrying out a predetermined operation by consuming power;
a human body detection sensor for detecting whether or not a human body is present;
an energy saving control means for carrying out energy saving control of said apparatus based on said detection result; and
a security means for giving notification in order for crime prevention or for disaster prevention based on said detection result.

22. A medium for containing a program and/or data which allow a computer to carry out the entirety of, or a part of, the functions of the entirety of , or a part of , a power consumption system according to any of Claims 1 to 21, said medium can be processed by a computer.

23. An information assembly **characterized by** being a program and/or data which allow a computer to carry out the entirety of, or a part of, the functions of the entirety of, or a part of, a power consumption system according to any of Claims 1 to 21.
